# EUROPEAN PATENT APPLICATION

(11) **EP 4 226 761 A1**
(43) Date of publication of application: **16.08.2023**
(21) Application number: 22156063.4
(22) Date of filing: 10.02.2022
(51) Int. Cl.: A01G 25/09, A01D 34/00, A01G 25/16, G05D 1/02

(54) **CONTROL SYSTEM FOR GARDEN AREA**

(71) Applicant: HUSQVARNA AB, 561 82 Huskvarna (SE)
(72) Inventor: Jägenstedt, Patrik, 56162 Tenhult (SE); Turesson, Alexander, 12243 Enskede (SE); Bergman, Joakim, 17975 Skå, Mariedal (SE); Alexiusson, Mikael, 52338 Ulricehamn (SE)
(74) Representative: Finkele, Rolf

(57) **Abstract**

A control system (**200**) for a garden area (**100**) includes one or more fluid outlets (**104**,**106**,**108**) and an irrigation device (**116**) adapted to be removably engaged with the one or more fluid outlets (**104**,**106**,**108**)**.** A robotic vehicle (**118**) facilitates removable engagement of the irrigation device (**116**) with the one or more fluid outlets (**104**,**106**,**108**) over the garden area (**100**)**.** The control system (**200**) is characterized in that each of the irrigation device (**116**) and the robotic vehicle (**118**) is configured as an independent movable unit. Further, the robotic vehicle (**118**) includes a manipulator (**120**) which mechanically facilitates removable engagement of the irrigation device (**116**) with the one or more fluid outlets (**104**,**106**,**108**) over the garden area (**100**)**.** A central controller (**202**) is configured to command the robotic vehicle (**118**) to facilitate removable engagement of the irrigation device (**116**) with the one or more fluid outlets (**104**,**106**,**108**) to irrigate the one or more portions of the garden area (**100**)**.**

## Description

### TECHNICAL FIELD

The present disclosure relates to a control system for a garden area. More specifically, the present disclosure relates to a control system for controlling irrigation for a garden area.

### BACKGROUND

With the growing advancements in technology, it is possible to monitor various aspects and factors related to a garden area such as environmental parameters, weather forecast, temperature, humidity etc. Therefore, it is also possible to come up with a schedule or routine for watering, irrigation, fertilization and other such tasks which may be required to keep various plans and vegetation being grown in a garden in a healthy state.

Conventionally, garden area may include one or more water outlets for providing water supply to carry out various operations such as irrigation, fertilization, cleaning, or the like. The one or more water outlets may be provided at different locations spread across the garden area. Different type of water distribution components may be attached with the water outlets to draw water therefrom such as sprinklers, water connectors, hose pipes etc. Ensuring proper connection of the water distribution device is imperative to carry out irrigation or watering or any other such operation in an efficient manner.

The water distribution components are typically coupled with the water outlets manually by a user. In some instances, a robotic vehicle may also be used to execute this operation. An example is provided by German patent application 10-2008-041323 (hereinafter referred to as the '323 reference). The '323 reference discloses an irrigation robot with drive means for steering and moving the irrigation robot on a work area and with irrigation means. An intelligence designed for the autonomous activation of the drive means and/or the irrigation means is provided on the watering robot. Various ground levelled water sockets provided on the garden area are associated with a water pipeline and allow access to water within the pipeline. The irrigation robot carries a water hose which may be removably plugged into the water sockets to irrigate the garden.

However, with the '323 reference, the irrigation robot does not include means to be a part of a central control system to better manage garden watering and irrigation. As the irrigation robot does not have knowledge about actual requirements, the irrigation robot merely transports the hose around the garden area without addition of any intelligent process inputs which may increase overall effectiveness of the task being performed. Such transportation may also give rise to issues such as entangling of hose with other gardening equipment, or a user may trip and fall on a sudden movement of the hose in the garden area or the like.

### SUMMARY

In view of the above, it is an objective of the present invention to solve or at least reduce the drawbacks discussed above. The objective is at least partially achieved by a control system for a garden area. The control system includes one or more fluid outlets disposed on the garden area adapted to provide a fluid supply. The control system includes an irrigation device adapted to be removably engaged with the one or more fluid outlets. The irrigation device is adapted to access the fluid supply from the one or more fluid outlets upon engagement and irrigate one or more portions of the garden area. The control system includes a robotic vehicle adapted to facilitate removable engagement of the irrigation device with the one or more fluid outlets over the garden area.

The control system is characterized in that each of the irrigation device and the robotic vehicle is configured as an independent movable unit. The robotic vehicle further includes a manipulator. The robotic vehicle is adapted to mechanically facilitate removable engagement of the irrigation device with the one or more fluid outlets over the garden area through the manipulator. The control system further includes a central controller communicably coupled to the robotic vehicle. The central controller is configured to command the robotic vehicle to facilitate removable engagement of the irrigation device with the one or more fluid outlets to irrigate the one or more portions of the garden area.

Thus, the present disclosure advantageously provides a control system to holistically manage irrigation needs of a garden area in an efficient and hassle-free manner. The control system uses the robotic vehicle to place the irrigation device on the one or more fluid outlets to draw water from the one or more fluid outlets. The irrigation device may execute irrigation of the garden area, or may fertilize the garden area making use of the water or fertilizer drawn from the one or more fluid outlets. As the central controller has substantial information regarding irrigation or fertilization needs of the garden area, the robotic vehicle may appropriately engage the irrigation device with the one or more fluid outlets.

Timing, amount, pressure and profile of the water or fertilizer being distributed through the irrigation device may be suitably controlled in tandem with the robotic vehicle and the irrigation device through inputs being provided by the central controller. The central controller makes use of all available information and provides inputs to increase the efficiency of irrigation of the garden area in a hassle-free manner. There is no risk of entanglement of hose pipes, or any sudden movement of any gardening equipment on the garden area as every movement is carefully and effectively planned by the central controller. Thus, the present disclosure provides an intelligent, smart, effective and efficient way to cater to the irrigation needs of garden area.

According to an embodiment of the present disclosure, the central controller is further configured to command the robotic vehicle to facilitate disengagement of the irrigation device with the one or more fluid outlets. Once an irrigation event of the garden area, or a portion of the garden area is completed, the central controller facilitates disengagement of the irrigation device with the one or more fluid outlets through the manipulator of the robotic vehicle. The robotic vehicle may proceed to next irrigation event or may wait for subsequent instructions from the central controller.

According to an embodiment of the present disclosure, the central controller is communicably coupled to the irrigation device. The central controller may receive information regarding an irrigation event being executed such as, but not limited to, an amount of water distributed, or an amount of fertilizer distributed, or a concentration profile of the fertilizer fluid being distributed, a spray profile of the irrigation device achieved during a particular irrigation event, a surface area of a particular portion of the garden area covered during irrigation etc. The irrigation device may also provide information about pressure, temperature, flow rate, cleanliness level or any other such parameters of the fluid being supplied by the one or more fluid outlets. The irrigation device may be suitably equipped with one or more sensors to measure such information. The irrigation device may also be suitably equipped with circuitry to convey the measured information and parameters to the central controller.

According to an embodiment of the present disclosure, the irrigation device is one or more of a water connector, a water sprinkler, a hose pipe. The water connector may allow coupling a water computer or a hose pipe or any other such device to suitably provide water to one or more portions of the garden area. The hose pipe may allow to efficiently carry water to all parts of the garden area. The water sprinkler may be controlled to achieve desired spray profile while providing water to the garden area. Such different components allow to achieve desired irrigation of the garden area through the central controller.

According to an embodiment of the present disclosure, the central controller includes an associated memory which stores information related to an irrigation profile of the garden area. The irrigation profile may include information such as amount of water required, suitable spray patterns, fertilizer requirements, timing of watering and fertilization or any other such parameters to provide water or fertilizer to a particular portion of the garden area in a desired manner. The memory allows storage and retrieval of various operational parameters, location of various equipment, and any other relevant parameters and information about the garden area, the robotic vehicle, the irrigation device, the one or more fluid outlets etc. which may help the central controller to manage controlling the garden area in an effective and efficient manner.

According to an embodiment of the present disclosure, the central controller commands the robotic vehicle based on the irrigation profile of the garden area. The central controller may make use of all the available information and then command the robotic vehicle accordingly to achieve the desired irrigation profile of one or more portions of the garden area.

According to an embodiment of the present disclosure, the manipulator further facilitates electronic coupling of the robotic vehicle and the irrigation device upon engagement such that the robotic vehicle and the irrigation device share operational data. The manipulator may couple the robotic vehicle and the irrigation device through a wired or a wireless connection such that the robotic vehicle and the irrigation device may share relevant information with each other. Such information sharing may provide real time feedback to the central controller as well regarding effectiveness of various operations on the garden area. This may allow access to more information to each component, and eventually the central controller which leads to a better management of the garden area.

According to an embodiment of the present disclosure, the robotic vehicle is a robotic mower. The robotic mower provides an efficient choice to a user as a single equipment may carry out multiple operations. A user may use a new robotic mower suitable for use with various aspects of the present disclosure. A user may also retrofit few control components on an already existing mower to make the robotic mower compatible to be used in accordance with various aspects of the present disclosure.

According to an embodiment of the present disclosure, the irrigation device is further utilized for fertilizing purposes. The irrigation device may very well be used for distribution of fertilizer across the garden area in a similar manner as water. Thus, the irrigation device takes care of fertilization needs of the garden area as well along with watering requirements.

According to an embodiment of the present disclosure, commanding the robotic vehicle includes sharing location coordinates of the one or more fluid outlets and the irrigation device with the robotic vehicle. Sharing location coordinates of the fluid outlets and the irrigation device helps the robotic vehicle to move over the garden area in a more efficient manner.

According to an embodiment of the present disclosure, commanding the robotic vehicle includes sharing navigation data for the robotic vehicle to reach the one or more fluid outlets and the irrigation device with the robotic vehicle. Navigation data allows the robotic vehicle to avoid any obstacles or any entanglements of hose pipe or any other components over the garden area. The robotic vehicle may move over the garden area in most effective and efficient manner.

According to an embodiment of the present disclosure, the central controller may be configured with a mobile device. The mobile device may be a smartphone, a laptop, a tablet or the like. A user may conveniently control the garden area merely through few clicks on the mobile device from comforts of their homes.

Other features and aspects of this invention will be apparent from the following description and the accompanying drawings.

### BRIEF DESCRIPTION OF THE DRAWINGS

The invention will be described in more detail with reference to the enclosed drawings, wherein:
FIG. **1** shows a garden area associated with a housing establishment, in accordance with an aspect of the present disclosure; and
FIG. **2** schematically shows a control system for the garden area of **FIG.1****,** in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

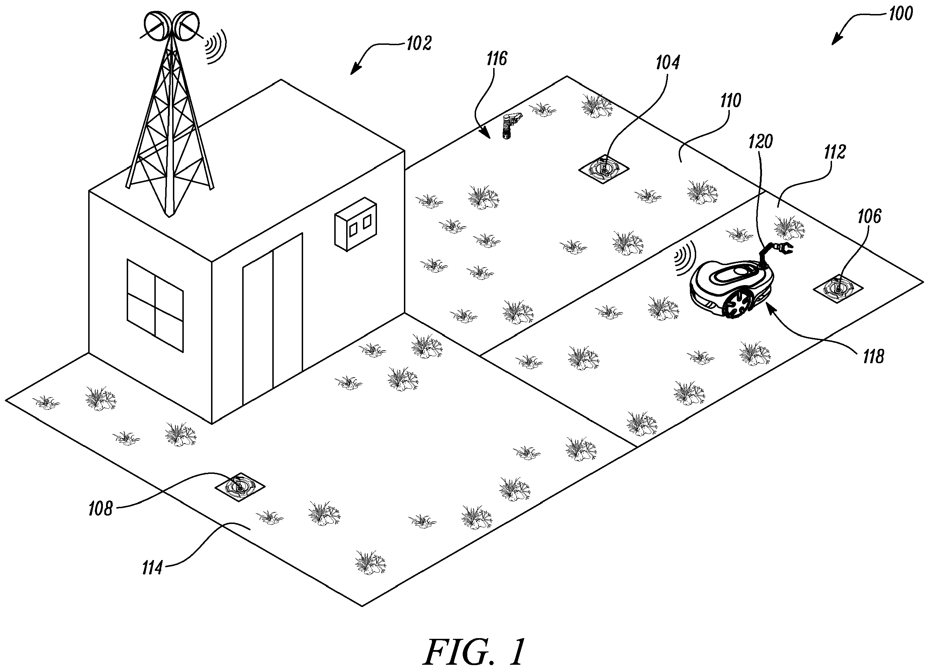

**FIG. 1** illustrates an exemplary garden area **100** associated with a housing establishment **102.** The housing establishment **102** may be any other type of an establishment as well which may be suitable for application with various aspects of the present disclosure. For example, the garden area **100** may be associated with a playground, a school, an official establishment, or the like.

The garden area **100** includes one or more fluid outlets **104, 106, 108** disposed on the garden area **100** adapted to provide a fluid supply. The fluid outlets **104, 106, 108** may be connected to one or more of a pipeline system, a reservoir, a garden pump arrangement, or any other type of water supply (not shown) which may be suited for application with various aspects of the present disclosure.

In an embodiment, the fluid may be water. The fluid may be used for irrigation purposes on the garden area **100.** In another embodiment, the fluid may be a fertilizer. The fluid may be utilized for fertilizing the garden area **100.** In some embodiments the fluid may be any other fluid as well without limiting the scope of the present disclosure in any manner.

The garden area **100** may include any number of fluid outlets **104, 106, 108.** For illustration purposes, the garden area **100** includes three fluid outlets **104, 106, 108.** The three fluid outlets **104, 106, 108** include a first fluid outlet **104,** a second fluid outlet **106** and a third fluid outlet **108.** In an embodiment, all three of the first fluid outlet **104,** the second fluid outlet **106** and the third fluid outlet **108** provide water. In another embodiment, all three of the first fluid outlet **104,** the second fluid outlet **106** and the third fluid outlet **108** provide fertilizer. In some embodiments, at least one of the three fluid outlets **104,106, 108** may provide water and at least one of the three fluid outlets **104,106, 108** may provide fertilizer. Any other such combination which may be envisioned may be well within the scope of the present disclosure.

The first fluid outlet **104,** the second fluid outlet **106** and the third fluid outlet **108** are located in a first garden area **110,** a second garden area **112** and a third garden area **114** respectively. The first garden area **110,** the second garden area **112** and the third garden area **114** may be similar or different to each other in terms of parameters such as surface area, number of garden plants, types of garden plants, number and types of garden equipment placed therein or the like. Any such combination of type of garden area may be well within the scope of the present disclosure.

Further, an irrigation device **116** is provided for irrigation of the garden area **100** through the one or more fluid outlets **104, 106,108.** More specifically, the irrigation device **116** may be provided for irrigation of the first garden area **110,** the second garden area **112** and the third garden area **114.** The irrigation device **116** is adapted to be removably engaged with the one or more fluid outlets **104, 106, 108.** More specifically, the irrigation device **116** is adapted to be removably engaged with the first fluid outlet **104,** the second fluid outlet **106** and the third fluid outlet **108.** The irrigation device **116** is adapted to access the fluid supply from the one or more fluid outlets **104, 106, 108** upon engagement and irrigate one or more portions of the garden area **100.** In another embodiment, the irrigation device **116** may also be utilized for fertilizing purposes. The one or more fluid outlets **104, 106,108** may provide fertilizer which may be distributed over the garden area **100** by the irrigation device **116** accordingly.

The first fluid outlet **104,** the second fluid outlet **106** and the third fluid outlet **108** may include suitable mechanical arrangement to be coupled with the irrigation device **116.** In an exemplary embodiment, the first fluid outlet **104,** the second fluid outlet **106** and the third fluid outlet **108** may be provided with any suitable mechanism such that the first fluid outlet **104,** the second fluid outlet **106** and the third fluid outlet **108** may provide fluid supply upon engagement with the irrigation device **116.** Further, the first fluid outlet **104,** the second fluid outlet **106** and the third fluid outlet **108** may stop the fluid supply after disengagement of the irrigation device **116.**

The irrigation device **116** may be any suitable device which may be capable enough to allow suitable distribution of the fluid being supplied from the one or more fluid outlets **104,106, 108** in a desired manner. In the illustrated embodiment, the irrigation device **116** is a water connector. In an embodiment, the irrigation device **116** may be a sprinkler. In yet another embodiment, the irrigation device **116** may be a hose pipe. The irrigation device **116** may be any other such component as well which may be suitably applicable with various aspects of the present disclosure. The irrigation device **116** is a standalone component which is capable of being propelled upon the garden area **100** in an assisted or an independent manner. More specifically, the irrigation device **116** is configured as an independent movable unit.

A robotic vehicle **118** is adapted to facilitate removable engagement of the irrigation device **116** with the one or more fluid outlets **104,106,108** over the garden area **100.** In the illustrated embodiment, the robotic vehicle **118** is a robotic mower. In other embodiments, the robotic vehicle **118** may be any other suitable robotic vehicle **118** as well which may be applicable with various aspects of the present disclosure. The robotic vehicle **118** is a standalone component which is capable of being propelled upon the garden area **100** in an independent manner. More specifically, the robotic vehicle **118** is configured as an independent movable unit.

The robotic vehicle **118** further includes a manipulator **120.** The robotic vehicle **118** is adapted to mechanically facilitate removable engagement of the irrigation device **116** with the one or more fluid outlets **104,106,108** over the garden area **100** through the manipulator **120.** The manipulator **120** may be a robotic arm, an actuator or any other such type of mechanism which may be suitably application with various aspects of the present disclosure. In the illustrated embodiment, the manipulator **120** is a robotic arm. The manipulator **120** may get suitably coupled with the irrigation device **116** and facilitate removable engagement of the irrigation device **116** with the one or more fluid outlets **104, 106,108** over the garden area **100.** In an exemplary embodiment, the manipulator **120** may set up the irrigation device **116** with the one or more fluid outlets **104,106, 108** such that the one or more fluid outlets **104,106, 108** start providing the fluid supply upon engagement therein. The manipulator **120** may be further adapted to disengage the irrigation device **116** with the one or more fluid outlets **104,106, 108.**

The garden area **100** may include various other components or equipment therein such as a hose box, a garden pump or the like. However, for the purpose of description of various aspects of the present disclosure, such components are not being described in detail herein. Any such components are envisioned well within the scope of the present disclosure and do not restrict the present disclosure in any manner.

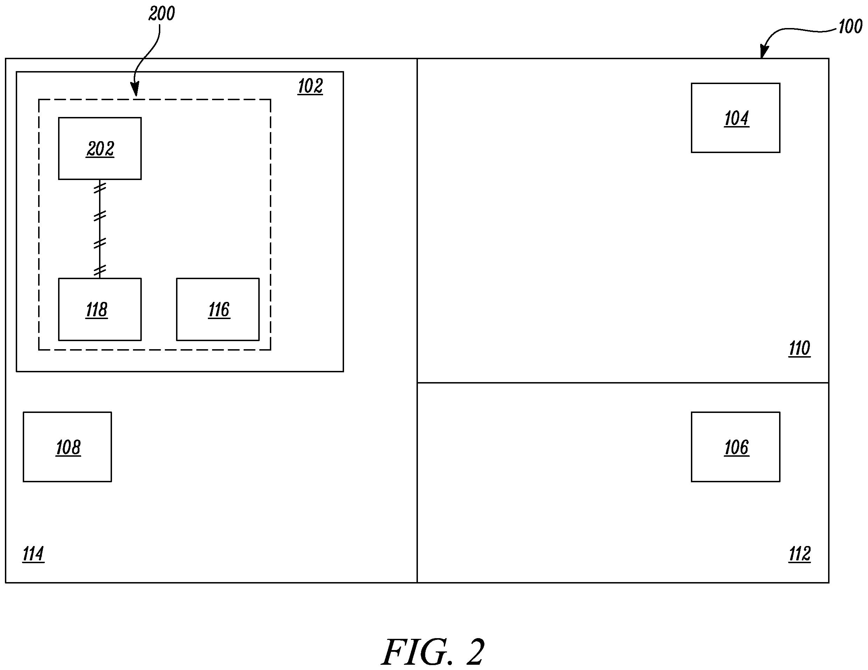

**FIG. 2** schematically illustrates a control system **200** for the garden area **100.** The control system **200** includes the one or more fluid outlets **104,106, 108.** More specifically, the control system **200** includes the first fluid outlet **104,** the second fluid outlet **106,** and the third fluid outlet **108.** The control system **200** includes the irrigation device **116** and the robotic vehicle **118.** The control system **200** further includes a central controller **202.** The central controller **202** may be a single controller or a plurality of controllers working together as a single unit to carry out various desired functions. In some embodiments, the central controller **202** may be configured with a microprocessor, a printer circuit board (PCB) or the like. It should be noted that the present disclosure is not limited by choice of type of the controller in any manner, and various suitable embodiments which may be envisioned by a person with ordinary skill in the art are well within the scope of the present disclosure.

The central controller **202** is communicably coupled to the robotic vehicle **118.** The central controller **202** may establish communication with the robotic vehicle **118** in any suitable manner such as Wi-Fi, Bluetooth, internet protocol, or any other such alternative which may be suitable for application with various aspects of the present disclosure. In an embodiment, the central controller **202** is communicably coupled with the robotic vehicle **118** in a wireless manner. In another embodiment, the central controller **202** is communicably coupled with the robotic vehicle **118** via a wired connection. In an exemplary embodiment, the central controller **202** and the robotic vehicle **118** may both include a transceiver to share information with each other.

The central controller **202** may be located at any location on the garden area **100.** For example, the central controller **202** may be placed within a secure and accessible enclosure over the garden area **100.** In another example, the central controller **202** may be placed inside the housing establishment **102.** In yet another example, the central controller **202** may also be placed at a remote location from the garden area **100.** In some embodiments, the central controller **202** may be configured with a mobile device such as a smartphone, a laptop, a tablet or the like. A user may conveniently control the garden area merely through few clicks on mobile device. The present disclosure is not limited by location of the central controller **202** in any manner.

The central controller **202** has an associated memory (not shown). The associated memory may be configured to store information about the garden area **100,** the robotic vehicle **118,** and the irrigation device **116.** The memory may store information about the garden area **100** such as an irrigation schedule, a fertilization requirement, or the like. In an embodiment, the memory may store information about type of plants in one or more portions of the garden area **100** and respective irrigation requirements. The memory may also store information regarding location of the one or more fluid outlets **104,106, 108** on the garden area **100.** More specifically, the memory may store location of the first fluid outlet **104,** the second fluid outlet **106** and the third fluid outlet **108** on the garden area **100.** The central controller **202** may store various other parameters as well which may be well within the scope of the present disclosure. In an embodiment, a user may provide input regarding location of the one or more fluid outlets **104,106, 108** to the central controller **202.**

The central controller **202** may identify irrigation needs of the garden area **100** based on the stored information. In an embodiment, the garden area **100** may include one or more sensors (not shown) installed across the garden area **100.** The one or more sensors may be communicably coupled with the central controller **202** and may provide information regarding various parameters such as, but not limited to, temperature, humidity, rainfall, or other environmental factors to the central controller **202.** The central controller **202** may also take such information in account while identifying irrigation needs of the garden area **100.**

The central controller **202** is configured to command the robotic vehicle **118** to facilitate removable engagement of the irrigation device **116** with the one or more fluid outlets **104,106, 108** to irrigate the one or more portions of the garden area **100.** The robotic vehicle **118** may receive the command from the central controller **202,** and then locate the irrigation device **116** on the garden area **100.** The robotic vehicle **118** may assist the irrigation device **116** to engage with the one or more fluid outlets **104,106, 108.** More specifically, the robotic vehicle **118** may facilitate engagement of the irrigation device **116** with the one or more fluid outlets **104,106, 108** through the manipulator **120** of the robotic vehicle **118.**

The control system **200** holistically manages irrigation needs of the garden area **100** in an efficient and hassle-free manner. The control system **200** uses the robotic vehicle **118** to place the irrigation device **116** on the one or more fluid outlets **104,106,108** to draw water from the one or more fluid outlets **104,106,108.** The irrigation device **116** may execute irrigation of the garden area **100** or may fertilize the garden area **100** making use of the water or fertilizer drawn from the one or more fluid outlets **104,106,108.** As the central controller **202** has substantial information regarding irrigation or fertilization needs of the garden area **100,** the robotic vehicle **118** may appropriately engage the irrigation device **116** with the one or more fluid outlets **104,106,108.**

The central controller **202** is further configured to command the robotic vehicle **118** to facilitate disengagement of the irrigation device **116** with the one or more fluid outlets **104,106, 108.** More specifically, the robotic vehicle **118** may facilitate disengagement of the irrigation device **116** with the one or more fluid outlets **104,106, 108** through the manipulator **120** of the robotic vehicle **118.**

In an embodiment, commanding the robotic vehicle **118** includes sharing location coordinates of the one or more fluid outlets **104,106, 108** and the irrigation device **116** with the robotic vehicle **118.** In another embodiment, commanding the robotic vehicle **118** includes sharing navigation data for the robotic vehicle **118** to reach the one or more fluid outlets **104,106, 108** and the irrigation device **116** with the robotic vehicle **118.**

With combined reference to **FIGS. 1** and **2****,** various aspects of the present disclosure are further illustrated through an exemplary scenario. The garden area **100** includes the first garden area **110,** the second garden area **112** and the third garden area **114.** The first garden area **110** includes the first fluid outlet **104.** The second garden area **112** includes the second fluid outlet **106.** The third garden area **114** includes the third fluid outlet **108.** For irrigating the first garden area **110,** the central controller **202** commands the robotic vehicle **118** to facilitate engagement of the irrigation device **116** with the first fluid outlet **104.**

The central controller **202** may share location coordinates of the first fluid outlet **104** with the robotic vehicle **118.** The central controller **202** may additionally or optionally share navigation data as well for the robotic vehicle **118** to reach the first fluid outlet **104** from a current location coordinate of the robotic vehicle **118.** The central controller **202** may also share location coordinates of the irrigation device **116** with the robotic vehicle **118.** The central controller **202** may receive location coordinates of the irrigation device **116** from a location sensor installed with the irrigation device **116,** or an imaging sensor such as a camera installed within the garden area **100,** or any other such suitable sensor. In an exemplary embodiment, the central controller **202** may receive location coordinates of the irrigation device **116** from a satellite system.

After receiving the location coordinates of the irrigation device **116,** the robotic vehicle **118** may move towards the irrigation device **116.** The central controller **202** may also share navigation commands with the robotic vehicle **118.** As the central controller **202** may have information about whereabouts of various components and equipment on the garden area **100,** the central controller **202** may provide efficient navigation instructions to the robotic vehicle **118** to reach location of the irrigation device **116.** In another embodiment, the robotic vehicle **118** may be equipped with adequate means to independently navigate way towards the irrigation device **116.**

The robotic vehicle **118** may use the manipulator **120** to pick up or engage with the irrigation device **116** and may move further towards the first fluid outlet **104.** The robotic vehicle **118** may then facilitate engagement of the irrigation device **116** with the first fluid outlet **104.** The robotic vehicle **118** may facilitate engagement of the irrigation device **116** with the first fluid outlet **104** using the manipulator **120.** For example, the manipulator **120** may place the irrigation device **116** over the first fluid outlet **104,** and then press the irrigation device **116** over the first fluid outlet **104** or rotate the irrigation device **116** over the first fluid outlet **104** or the like. The manipulator **120** may perform any other such operation as well to engage the irrigation device **116** with the first fluid outlet **104.**

After the engagement of the irrigation device **116** with the first fluid outlet **104,** the first fluid outlet **104** may provide fluid supply to the first garden area **110** through the irrigation device **116.** The first fluid outlet **104** may be placed on the first garden area **110** such that the first fluid outlet **104** may effectively provide fluid supply to the first garden area **110** accordingly. For example, if the irrigation device **116** is a sprinkler, the first fluid outlet **110** may be placed such that a range of the sprinkler may cover entire surface of the first garden area **110.**

Timing, amount, pressure and profile of the water or fertilizer being distributed through the irrigation device **116** may be suitably controlled in tandem with the robotic vehicle **118** and the irrigation device **116** through inputs being provided by the central controller **202.** The central controller **202** makes use of all available information and provides inputs to increase the efficiency of irrigation of the garden area **100** in a hassle-free manner. There is no risk of entanglement of hose pipes, or any sudden movement of any gardening equipment on the garden area **100** as every movement is carefully and effectively planned by the central controller **202.** Thus, the present disclosure provides an intelligent, smart, effective and efficient way to cater to the irrigation needs of garden area **100.**

Post completion of the irrigation, the central controller **202** may command the robotic vehicle **118** to facilitate disengagement of the irrigation device **116** with the first fluid outlet **104.** The robotic vehicle **118** may then facilitate disengagement of the irrigation device **116** with the first fluid outlet **104** using the manipulator **120.** For example, the manipulator **120** may press again on the irrigation device **116** or rotate the irrigation device **116** in a reverse direction compared to direction of rotation while engagement or may lift up the irrigation device **116** to disengage the irrigation device **116** with the first fluid outlet **104.**

The central controller **202** may command the robotic vehicle to place the irrigation device **116** at any other location on the garden area **100,** or may leave the irrigation device **116** near the first fluid outlet **104,** or may proceed further to irrigate the second garden area **112** or the third garden area **114** etc. The central controller **202** may also collect feedback regarding the irrigation operation from various sensors which may be placed upon the garden area **100.** Further, in an embodiment, the central controller **202** may also be communicably coupled with the irrigation device **116.** The irrigation device **116** may provide information regarding an amount of fluid distributed in a particular part of the garden area **100.** Such information may help the central controller **202** to understand and plan controlling the garden area **100** in a better manner.

The irrigation device **116** may provide the central controller **202** with information regarding irrigation event being executed such as an amount of water distributed, or an amount of fertilizer distributed, or a concentration profile of the fertilizer fluid being distributed, a spray profile of the irrigation device **116** achieved during a particular irrigation event, a surface area of a particular portion of the garden area **100** covered during irrigation etc. The irrigation device **116** may also provide information about pressure, temperature, flow rate, cleanliness level or any other such parameter of the fluid being supplied by the one or more fluid outlets **104,106,108.** The irrigation device **116** may be suitably equipped with one or more sensors to measure such information.

In an embodiment, the manipulator **120** further facilitates electronic coupling of the robotic vehicle **118** and the irrigation device **116** upon engagement such that the robotic vehicle **118** and the irrigation device **116** share operational data. The irrigation device **116** may share the operational data with the robotic vehicle **118** such as amount of water distributed, water pressure ranges from the one or more fluid outlets **104,106, 108,** water quality or the like. The robotic vehicle **118** may then share the operational data with the central controller **202.**

The manipulator **120** may couple the robotic vehicle **118** and the irrigation device **116** through a wired or a wireless connection such that the robotic vehicle **118** and the irrigation device **116** may share relevant information with each other. Such information sharing may provide real time feedback to the central controller **202** as well regarding effectiveness of various operations on the garden area **100.** This may allow access to more information to each component, and eventually the central controller **202** which may lead to a better management of the garden area **100.**

In some embodiments, the irrigation device **116** may also include appropriate components to be communicably coupled with the robotic vehicle **118** or the central controller **202.** The irrigation device **116** may include a transceiver to share information with the robotic vehicle **118** or the central controller **202.** The irrigation device **116** may include one or more sensors installed or coupled thereon to collect various operational as well as environmental data concerning the garden area **100.** The irrigation device **116** may share the collected data with the robotic vehicle **118** or the central controller **202.** In an example, the irrigation device **116** may share location coordinates of the irrigation device **116** with the robotic vehicle **118** or the central controller **202.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Garden area
- **102**: Housing establishment
- **104**: First fluid outlet
- **106**: Second fluid outlet
- **108**: Third fluid outlet
- **110**: First garden area
- **112**: Second garden area
- **114**: Third garden area
- **116**: Irrigation device
- **118**: Robotic vehicle
- **120**: Manipulator
- **200**: Control system
- **202**: Central controller

## Claims

1. A control system **(200)** for a garden area **(100),** the control system **(200)** comprising:
one or more fluid outlets **(104,106,108)** disposed on the garden area **(100)** adapted to provide a fluid supply;
an irrigation device **(116)** adapted to be removably engaged with the one or more fluid outlets **(104,106,108),** wherein the irrigation device **(116)** is adapted to access the fluid supply from the one or more fluid outlets **(104,106,108)** upon engagement and irrigate one or more portions of the garden area **(100);** and
a robotic vehicle **(118)** adapted to facilitate removable engagement of the irrigation device **(116)** with the one or more fluid outlets **(104,106,108)** over the garden area **(100);**
**characterized in that:**
each of the irrigation device **(116)** and the robotic vehicle **(118)** is configured as an independent movable unit;
the robotic vehicle **(118)** further includes a manipulator **(120),** wherein the robotic vehicle **(118)** is adapted to mechanically facilitate removable engagement of the irrigation device **(116)** with the one or more fluid outlets **(104,106,108)** over the garden area **(100)** through the manipulator **(120);**
the control system **(200)** further includes a central controller **(202)** communicably coupled to the robotic vehicle **(118),** wherein the central controller **(202)** is configured to command the robotic vehicle **(118)** to facilitate removable engagement of the irrigation device **(116)** with the one or more fluid outlets **(104,106,108)** to irrigate the one or more portions of the garden area **(100).**

2. The control system **(200)** of claim **1,** wherein the central controller **(202)** is further configured to command the robotic vehicle **(118)** to facilitate disengagement of the irrigation device **(116)** with the one or more fluid outlets **(104,106,108).**

3. The control system **(200)** of claim **1,** wherein the central controller **(202)** is communicably coupled to the irrigation device **(116).**

4. The control system **(200)** of any of preceding claims, wherein the irrigation device **(116)** is one or more of a water connector, a water sprinkler, a hose pipe.

5. The control system **(200)** of any of preceding claims, wherein the central controller **(202)** includes an associated memory which stores information related to an irrigation profile of the garden area **(100).**

6. The control system **(200)** of claim **5,** wherein the central controller **(202)** commands the robotic vehicle **(118)** based on the irrigation profile of the garden area **(100).**

7. The control system **(200)** of any of preceding claims, wherein the manipulator **(120)** further facilitates electronic coupling of the robotic vehicle **(118)** and the irrigation device **(116)** upon engagement such that the robotic vehicle **(118)** and the irrigation device **(116)** share operational data.

8. The control system **(200)** of any of preceding claims, wherein the robotic vehicle **(118)** is a robotic mower.

9. The control system **(200)** of any of preceding claims, wherein the irrigation device **(116)** is further utilized for fertilizing purposes.

10. The control system **(200)** of any of preceding claims, wherein commanding the robotic vehicle **(118)** includes sharing location coordinates of the one or more fluid outlets **(104,106,108)** and the irrigation device **(116)** with the robotic vehicle **(118).**

11. The control system **(200)** of any of preceding claims, wherein commanding the robotic vehicle **(118)** includes sharing navigation data for the robotic vehicle **(118)** to reach the one or more fluid outlets **(104,106,108)** and the irrigation device **(116)** with the robotic vehicle **(118).**

12. The control system **(200)** of any of preceding claims, wherein the central controller **(202)** is configured with a mobile device.
